# EUROPÄISCHE PATENTANMELDUNG

(11) **EP 4 435 544 A1**
(43) Veröffentlichungstag der Anmeldung: **25.09.2024**
(21) Anmeldenummer: 23163157.3
(22) Anmeldetag: 21.03.2023
(51) Int. Cl.: G05B 19/418

(54) **UNTERSTÜTZUNG EINES INDUSTRIELLEN FERTIGUNGSPROZESSES**

(71) Anmelder: Siemens Aktiengesellschaft, 80333 München (DE)
(72) Erfinder: HAMM, Carsten, 91330 Eggolsheim (DE); ROSENBERG, Jens Ansgar, 91438 Bad Windsheim (DE); GÜNTHER, Erich, 91056 Erlangen (DE); KUEHLWETTER, Florian, 53343 Wachtberg (DE)
(74) Vertreter: Siemens Patent Attorneys

(57) **Zusammenfassung**

Die Erfindung betrifft ein Verfahren zum Unterstützen eines industriellen Fertigungsprozesses (82), wobei
- der Fertigungsprozess (82) mit einem digitalen Zwilling (84) gekoppelt wird, wobei der digitale Zwilling ein Verhalten des Fertigungsprozesses nachbildet,
- der digitale Zwilling vom Fertigungsprozess entkoppelt wird,
- abhängig vom digitalen Zwilling wenigstens ein Simulationsmodell (46), wenigstens ein Startparameter für das jeweilige Simulationsmodell (46), wenigstens eine Einstellung für das jeweilige Simulationsmodell sowie eine Zielvorgabe (50) für ein Ergebnis des Fertigungsprozesses (82) vorgegeben werden,
- das wenigstens eine Simulationsmodell (mit dem wenigstens einen Startparameter und der wenigstens einen Einstellung numerisch mittels einer Rechnereinheit (30, 32, 34) als Simulation betrieben (48) wird,
- Ergebnisdaten (36, 38, 40, 42) aus dem Betrieb (48) des Simulationsmodells (46) in Bezug auf die Zielvorgabe (50) ermittelt werden, und
- die Ergebnisdaten für einen zukünftigen Betrieb des Fertigungsprozesses (82) bereitgestellt (62) werden.

## Beschreibung

Die Erfindung betrifft ein Verfahren zum Unterstützen eines industriellen Fertigungsprozesses, wobei der Fertigungsprozess mit einem digitalen Zwilling gekoppelt wird, wobei der digitale Zwilling ein Verhalten des Fertigungsprozesses nachbildet. Die Erfindung betrifft ferner ein Rechnerprogrammprodukt sowie einen elektronisch lesbaren Datenträger. Schließlich betrifft die Erfindung auch eine Vorrichtung zum Unterstützen eines industriellen Fertigungsprozesses, wobei die Vorrichtung ausgebildet ist, einen digitalen Zwilling bereitzustellen und den digitalen Zwilling mit dem Fertigungsprozess zu koppeln, wobei der digitale Zwilling ein Verhalten des Fertigungsprozesses nachbildet.

Gattungsgemäße Verfahren, Vorrichtungen sowie Rechnerprogrammprodukte und elektronisch lesbare Datenträger sind im Stand der Technik umfänglich bekannt, sodass es eines gesonderten druckschriftlichen Nachweises hierfür nicht bedarf. Industrielle Fertigungsprozesse können beliebige Fertigungsprozesse sein, mit denen unter anderem industriell Gegenstände bereitgestellt, verändert oder auch Bearbeitungsverfahren an solchen Gengeständen angewendet werden. Industrielle Fertigungsprozesse können zum Beispiel das Herstellen einer Bohrung an einem Gegenstand aus einem festen Werkstoff, ein Bearbeiten einer Oberfläche eines Gegenstands, das Herstellen von Produkten und/oder weitere sein. Die Erfindung ist dem Grunde nach nicht auf einen spezifischen Fertigungsprozess beschränkt und kann bei nahezu beliebigen Fertigungsprozessen zum Einsatz kommen.

Industrielle Fertigungsprozesse sind teilweise komplexe Vorgänge, bei denen eine Bearbeitung eines Gegenstands durchgeführt wird. So ist beispielsweise das Herstellen einer Bohrung an einem Werkstück damit verbunden, einen für die Realisierung der Bohrung geeigneten Bohrer auszuwählen, eine geeignete Drehzahl zu bestimmen, ein geeignetes Schmier- beziehungsweise Kühlmittel zu bestimmen, einen geeigneten Vorschub für den Bohrer und/oder dergleichen. Die vorgenannten Parameter haben darüber hinaus auch Einfluss auf einen Verschleiß des Bohrers, eine Genauigkeit der Bohrung, einen Energieverbrauch und/oder dergleichen.

Im Stand der Technik ist es bislang üblich, je nach Art einer Zielvorgabe, wie zum Beispiel Energieverbrauch, Genauigkeit, Verschleiß, Bohrgeschwindigkeit und/oder dergleichen, den Fertigungsprozess mittels Durchführung einer Vielzahl von Versuchen zu unterstützen, insbesondere zu optimieren. Dies hat sich außerordentlich aufwendig erwiesen, weshalb diese Art der Optimierung nur sehr begrenzten Fortschritt erlaubt.

Darüber hinaus ist es bekannt, den Fertigungsprozess mittels eines Simulationsmodells numerisch nachzubilden und anhand eines Betreibens des Simulationsmodells zu versuchen, die Anzahl der praktisch durchzuführenden Versuche zu reduzieren und ein gewisses Maß an Beschleunigung bei der Unterstützung beziehungsweise Optimierung zu erreichen. Gleichwohl ist es in der Regel erforderlich, eine Vielzahl solcher Simulationen durchzuführen, die dann auch zu einer Vielzahl von Ergebnisdaten führen, wobei ferner zu beachten ist, dass jede Simulation aufwendig eingestellt werden muss, um eine angemessene Chance auf ein verwertbares Simulationsergebnis zu haben. Auch die Nutzung von einem Simulationsmodell für sich genommen trägt daher nicht wesentlich zu einer Verbesserung bei.

Darüber hinaus können bei einem Fertigungsprozess unerwartete, insbesondere unerwünschte, Probleme auftreten, die beispielsweise in Bezug auf das Bohren ein Brechen des Bohrers, einen schnellen Verschleiß und/oder dergleichen sein können. Solche unerwarteten Probleme sind mittels einer Simulation teilweise nur schwer zu erfassen und erfordern ein entsprechend angepasstes Simulationsmodell sowie einen großen Aufwand für dessen Einstellung.

Der Erfindung liegt die Aufgabe zugrunde, die Möglichkeit einer Unterstützung beziehungsweise einer Verbesserung eines jeweiligen Fertigungsprozesses zu verbessern.

Als Lösung werden mit der Erfindung ein Verfahren, eine Vorrichtung, ein Rechnerprogrammprodukt sowie ein elektronisch lesbarer Datenträger gemäß den unabhängigen Ansprüchen vorgeschlagen.

Vorteilhafte Weiterbildungen ergeben sich durch Merkmale der abhängigen Ansprüche.

In Bezug auf ein gattungsgemäßes Verfahren wird mit der Erfindung insbesondere vorgeschlagen, dass der Fertigungsprozess mit einem digitalen Zwilling gekoppelt wird, wobei der digitale Zwilling ein Verhalten des Fertigungsprozesses nachbildet, der digitale Zwilling vom Fertigungsprozess entkoppelt wird, abhängig vom digitalen Zwilling wenigstens ein Simulationsmodell, wenigstens ein Startparameter für das jeweilige Simulationsmodell, wenigstens eine Einstellung für das jeweilige Simulationsmodell sowie eine Zielvorgabe für ein Ergebnis des Fertigungsprozesses vorgegeben werden, das wenigstens eine Simulationsmodell mit dem wenigstens einen Startparameter und der wenigstens einen Einstellung numerisch mittels einer Rechnereinheit als Simulation betrieben wird, Ergebnisdaten aus dem Betrieb des Simulationsmodells in Bezug auf die Zielvorgabe ermittelt werden, und die Ergebnisdaten für einen zukünftigen Betrieb des Fertigungsprozesses bereitgestellt werden.

In Bezug auf ein gattungsgemäßes Rechnerprogrammprodukt wird mit der Erfindung insbesondere vorgeschlagen, dass das Rechnerprogrammprodukt ein Programm für eine Rechnereinheit umfasst, wobei das Programm Programmkodeabschnitte eines Rechnerprogramms zum Ausführen der Schritte eines Verfahrens gemäß der Erfindung aufweist, wenn das Rechnerprogramm durch die Rechnereinheit ausgeführt wird, sodass wenigstens ein Ergebnisdatensatz für einen zukünftigen Betrieb eines Fertigungsprozesses bereitgestellt wird.

In Bezug auf den elektronisch lesbaren Datenträger wird mit der Erfindung insbesondere vorgeschlagen, dass der elektronisch lesbare Datenträger darauf gespeicherte elektronisch lesbare Steuerinformationen aufweist, welche zumindest ein Rechnerprogrammprodukt gemäß der Erfindung umfassen und derart ausgestaltet sind, dass bei Steuerung einer Rechnereinheit unter Nutzung der Steuerinformationen des Datenträgers die Rechnereinheit das Verfahren gemäß der Erfindung durchführt.

In Bezug auf eine gattungsgemäße Vorrichtung zum Unterstützen eines industriellen Fertigungsprozesses wird mit der Erfindung insbesondere vorgeschlagen, dass die Vorrichtung ausgebildet ist, einen digitalen Zwilling bereitzustellen und den digitalen Zwilling mit dem Fertigungsprozess zu koppeln, wobei der digitale Zwilling ein Verhalten des Fertigungsprozesses nachbildet, den digitalen Zwilling vom Fertigungsprozess zu entkoppeln, abhängig vom digitalen Zwilling wenigstens ein Simulationsmodell, wenigstens einen Startparameter für das jeweilige Simulationsmodell, wenigstens eine Einstellung für das jeweilige Simulationsmodell sowie eine Zielvorgabe für ein Ergebnis des Fertigungsprozesses vorzugeben, das wenigstens eine Simulationsmodell mit dem wenigstens einen Startparameter und der wenigstens einen Einstellung numerisch mittels einer Rechnereinheit als Simulation zu betreiben, Ergebnisdaten aus dem Betrieb des Simulationsmodells in Bezug auf die Zielvorgabe zu ermitteln, und die Ergebnisdaten für einen zukünftigen Betrieb des Fertigungsprozesses bereitzustellen.

Die Erfindung basiert unter anderem auf dem Gedanken, dass der Fertigungsprozess durch die Nutzung eines digitalen Zwillings besser unterstützt werden kann. Durch die Nutzung des digitalen Zwillings ist es nämlich möglich, unter anderem den wenigstens einen Startparameter und/oder die wenigstens eine Einstellung anhand des digitalen Zwillings vorzugeben und so den Betrieb des Simulationsmodells erheblich zu vereinfachen. Darüber hinaus kann der digitale Zwilling auch dazu genutzt werden, ein geeignetes Simulationsmodell aus einer Bibliothek von mehreren Simulationsmodellen in geeigneter Weise auszuwählen. Die Zielvorgabe kann beispielsweise ebenfalls aus einer entsprechenden Bibliothek beziehungsweise Datenbank mit Zielvorgaben vorgesehen sein. Es kann aber auch vorgesehen sein, dass ein Nutzer des Fertigungsprozesses eine entsprechende Zielvorgabe vorgibt beziehungsweise aus der Bibliothek beziehungsweise Datenbank auswählt. Die Zielvorgabe kann zum Beispiel ein möglichst geringer Energieverbrauch, ein möglichst geringer Verschleiß, eine hohe Genauigkeit und/oder dergleichen sein. Die Zielvorgabe braucht nicht auf einen einzigen Parameter oder Wert beschränkt zu sein. Sie kann mehrere Parameter oder Werte aufweisen.

Der Fertigungsprozess weist in der Regel eine Fertigungsanlage und/oder eine oder mehrere Maschinen auf. Dies können zum Beispiel Maschinen zur Be- oder Verarbeitung von Gegenständen sein, wie beispielsweise Werkzeugmaschinen, Industrieroboter, Produktionsmaschinen und/oder dergleichen. Die Anlage beziehungsweise Maschine umfasst in der Regel unter anderem auch eine Automatisierungstechnik, also Gerätschaften zur industriellen Automatisierung, wie zum Beispiel Motoren, Umrichter, Regelungsbaugruppen, Steuerungstechnik und/oder dergleichen. Vorzugsweise kann vorgesehen sein, dass der digitale Zwilling entsprechend konfiguriert wird, damit der das Verhalten des Fertigungsprozesses nachgebildet wird. Beispielsweise kann auch vorgesehen sein, dass der digitale Zwilling so lange trainiert wird, bis der digitale Zwilling das Verhalten des Fertigungsprozesses nachbildet. Es können auch Kombinationen hierzu oder weitere Möglichkeiten vorgesehen sein.

In Bezug auf das eingangs beschriebene Problem eines Bohrprozesses als Fertigungsprozesses kann beispielsweise der Verschleiß des Bohrers, ein Energieverbrauch für einen jeweiligen Bohrprozess, eine Bohrgeschwindigkeit und/oder dergleichen als Zielvorgabe vorgesehen sein. Dem Grunde nach besteht jedoch auch die Möglichkeit, den digitalen Zwilling selbst als Simulationsmodell zu nutzen, wodurch die Parametrierung beziehungsweise Einstellung des Simulationsmodells erheblich erleichtert werden kann. Die entsprechenden Einstellungen können beispielsweise vom digitalen Zwilling direkt übernommen werden.

Darüber hinaus ist es auf einfache Weise möglich, zum Beispiel eine Startkonfiguration für die Simulation mittels des digitalen Zwillings auf einfache Weise vorzugeben. Es brauchen keine separaten Startparameter beziehungsweise Einstellungen vorgenommen zu werden. Diese können automatisiert durch den digitalen Zwilling bereitgestellt werden.

Digitale Zwillinge werden in einer Vielzahl von Anwendungen beziehungsweise Diensten genutzt, wie zum Beispiel Konstruktion, Testen, Wartung, Überwachung, Fehlervorhersage, Training und/oder dergleichen. Ein digitaler Zwilling eines physikalischen Systems beziehungsweise eines realen Objekts, insbesondere eines Fertigungsprozesses, kann derart implementiert sein, dass ein oder mehrere Sensoren Werte von einem oder mehreren Parametern des Fertigungsprozesses erfassen. Diese Werte können für den digitalen Zwilling genutzt werden. Der digitale Zwilling stellt ein numerisches Abbild des realen Fertigungsprozesses beziehungsweise des realen Objekts dar und kann mittels der entsprechenden Vorrichtung im Wesentlichen gleichermaßen wie der Fertigungsprozess betrieben werden und kann somit nahezu ein vollständiges digitales Abbild des realen Fertigungsprozesses darstellen. Der digitale Zwilling empfängt Daten entsprechend der mittels der Sensoren erfassten Parameter und kann für zumindest einen ausgewählten Bereich des Fertigungsprozesses eine Betriebssituation oder des entsprechend dargestellten physikalischen Systems koppeln. Darüber hinaus kann auf nahezu beliebige Betriebssituationen, Parameter und Betriebszustände des Fertigungsprozesses mittels des digitalen Zwillings zugegriffen werden. Es können für einen Fertigungsprozess mehrere digitale Zwillinge vorgesehen sein. Eine entsprechende Vorrichtung und ein entsprechendes Verfahren der gattungsgemäßen Art sind zum Beispiel offenbart in der US 2017/0286572 A1.

Durch die Anwendung und die Nutzung von digitalen Zwillingen in vielen technischen Gebieten können zunehmend reale Komponenten beziehungsweise Fertigungsprozesse digitalisiert werden und entsprechende digitale Gegenstücke als digitale Zwillinge erzeugt werden. Um, vorzugsweise permanent, ein realistisches digitales Modell beziehungsweise einen digitalen Zwilling des Fertigungsprozesses zu haben, ist insbesondere ein permanenter Datenaustausch zwischen dem digitalen Zwilling und dem Fertigungsprozess vorgesehen. Dadurch kann der digitale Zwilling mit dem Fertigungsprozess gekoppelt werden. Durch Konfigurieren beziehungsweise Trainieren des digitalen Zwillings, bis der digitale Zwilling ein Verhalten des Fertigungsprozesses nachbildet, kann erreicht werden, dass der digitale Zwilling den Fertigungsprozess hinreichend genau abbildet. Die Genauigkeit kann durch eine entsprechende Vorgabe vorgegeben sein. Koppeln des Fertigungsprozesses mit dem digitalen Zwilling meint insbesondere ein logisches Koppeln, sodass der digitale Zwilling in einem gekoppelten Zustand zum Beispiel das gleiche wie der Fertigungsprozess macht und/oder umgekehrt. Dieses Koppeln kann unter anderem ein kommunikationstechnisches Koppeln umfassen. In einem entkoppelten Zustand können der Fertigungsprozess und der digitale Zwilling beispielsweise zumindest teilweise unabhängig voneinander betrieben werden.

Abhängig vom digitalen Zwilling sieht die Erfindung vor, dass ein Simulationsmodell vorgegeben wird. Das Simulationsmodell kann bezüglich des Fertigungsprozesses, insbesondere in Bezug auf die Zielvorgabe, entsprechend ausgewählt sein. Vorzugsweise ist es an den jeweiligen Fertigungsprozess angepasst gewählt. Es kann sein, dass für den jeweiligen Fertigungsprozess mehr als nur ein Simulationsmodell zur Verfügung steht.

Darüber hinaus wird wenigstens ein Startparameter für das jeweilige Simulationsmodell vorgegeben. Der Startparameter kann im Falle des Bohrprozesses beispielsweise ein Bohrdurchmesser und/oder eine Bohrtiefe sein. Der Startparameter ist ein Parameter, der beispielsweise eine Startbedingung für den Start einer Simulation vorgibt. Der Startparameter kann ein fest vorgegebener Parameter sein, der während des Betreibens der Simulation nicht verändert wird. Es kann aber auch vorgesehen sein, dass der Startparameter während der Simulation verändert wird. Ob ein Startparameter während des Betreibens der Simulation verändert werden kann, kann separat vorgegeben werden. Der wenigstens eine Startparameter kann ein beliebiger geeigneter Parameter sein. Es können mehrere Startparameter vorgesehen sein, von beispielsweise wenigstens einer der Startparameter ein fixer beziehungsweise unveränderlicher Startparameter oder ein veränderbarer Startparameter ist. Das Verändern eines Startparameters kann im Rahmen des Betreibens der Simulation erfolgen, um beispielsweise eine Optimierung in Bezug auf den Fertigungsprozess zu erreichen.

Darüber hinaus kann eine Einstellung für das jeweilige Simulationsmodell vorgegeben werden, beispielsweise die Wahl von Stützstellen für die Durchführung der Simulation, beispielsweise indem bestimmte Zeitpunkte für eine Erfassung von Betriebszuständen vorgegeben werden oder dergleichen. Es kann vorgesehen sein, dass zu jeweiligen Stützstellen der jeweiligen Simulation Zustandsdaten der Simulation erfasst und gespeichert werden. Diese Daten können einen Betriebszustand zu einem bestimmten Zeitpunkt darstellen. Ferner wird die Zielvorgabe vorgegeben, beispielsweise eine möglichst große Fertigungsgeschwindigkeit beim Herstellen der Bohrung bei möglichst geringem Energieverbrauch oder dergleichen.

Sodann wird das Simulationsmodell mittels einer Rechnereinheit als Simulation betrieben. Die Einstellung des Simulationsmodells kann unter anderem auch ein Abbruchkriterium enthalten, beispielsweise wenn die Zielvorgabe erreicht ist oder sich während der Simulation herausstellt, dass die Zielvorgabe nicht erreicht werden kann, oder dergleichen. Es kann zum Beispiel auch eine maximale Zeit für die Durchführung der Simulation vorgegeben sein.

Aus dem Betrieb des Simulationsmodells werden in Bezug auf die Zielvorgabe Ergebnisdaten ermittelt, die dann für den zukünftigen Betrieb des Fertigungsprozesses bereitgestellt werden. Hierfür können die Ergebnisdaten zum Beispiel an den Fertigungsprozess übertragen werden, der entsprechende Einstellungen vornimmt. Es kann aber auch vorgesehen sein, dass die Ergebnisdaten an einen Nutzer ausgegeben werden, der dann die entsprechenden Ergebnisdaten zumindest teilweise in den Fertigungsprozess übernehmen kann.

Die Verfahrensführung der Erfindung kann natürlich beliebig wiederholt werden. Dabei können Startparameter, Einstellungen sowie auch das Simulationsmodell variiert werden. Beispielsweise ist es möglich, ein anderes Simulationsmodell auszuwählen und die Simulation mit ansonsten gleichen Parametern und Einstellungen erneut durchzuführen. Ebenso können auch Einstellungen und Startparameter variiert werden. Ergeben sich mehrere unterschiedliche Optionen aufgrund eines wiederholten Betriebs für Ergebnisdaten betreffend den zukünftigen Betrieb des Fertigungsprozesses, kann vorgesehen sein, dass eine entsprechende Auswahl erfolgt. Die Auswahl kann entweder automatisiert und/oder durch einen Nutzer vorgenommen werden.

Die erfindungsgemäße Verfahrensführung kann beispielsweise durch eine geeignete Vorrichtung realisiert werden. Vorzugsweise weist die Vorrichtung zumindest teilweise die Rechnereinheit auf, mittels der das Simulationsmodell betrieben wird. Die Vorrichtung kann darüber hinaus auch den digitalen Zwilling bereitstellen. Die Vorrichtung kann zumindest teilweise durch einen Leitstand für den Fertigungsprozess gebildet sein. Darüber hinaus kann die Vorrichtung auch auf mehrere Rechnereinheiten verteilt sein, die untereinander kommunikationstechnisch miteinander gekoppelt sind. Die Vorrichtung kann vorzugsweise mit dem Leitstand für den industriellen Fertigungsprozess kommunikationstechnisch gekoppelt sein. Unter einer Rechnereinheit kann insbesondere ein Datenverarbeitungsgerät verstanden werden, das einen Verarbeitungsschaltkreis enthält. Die Rechnereinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen. Die Rechnereinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Rechnereinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Rechnereinheit kann auch einen physischen oder einen virtuellen Verbund von Computern oder sonstigen der genannten Einheiten beinhalten.

In verschiedenen Ausführungsbeispielen weist die Rechnereinheit eine oder mehrere Hardware- und/oder Softwareschnittstellen und/oder eine oder mehrere Speichereinheiten auf.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCR_AM (englisch: "phase-change random access memory"), ausgestaltet sein.

Gemäß einer Weiterbildung wird vorgeschlagen, dass das Bereitstellen der Ergebnisdaten umfasst, dass die Ergebnisdaten beim digitalen Zwilling angewendet werden und der digitale Zwilling mit dem Fertigungsprozess gekoppelt wird. Auf diese Weise kann ein einfaches Übertragen der Ergebnisdaten auf den Fertigungsprozess erreicht werden, wobei zugleich ein zuverlässiges, sicheres Betreiben des Fertigungsprozesses mit den Ergebnisdaten erreicht werden kann. So können beispielsweise gefährliche Zwischenzustände oder dergleichen vermieden werden. Dies kann unter anderem dadurch erreicht werden, dass der digitale Zwilling vorzugsweise zu jedem Zeitpunkt den Fertigungsprozess digital abbildet, wenn der digitale Zwilling mit dem Fertigungsprozess gekoppelt ist. Darüber hinaus kann auch ein Validieren der Ergebnisdaten anhand der Anwendung auf den digitalen Zwilling erreicht werden, insbesondere bevor die Ergebnisdaten an dem Fertigungsprozess angewendet werden. Beispielsweise kann vorgesehen sein, dass die Ergebnisdaten beim digitalen Zwilling angewendet werden, solange dieser noch vom Fertigungsprozess entkoppelt ist. Sobald die Ergebnisdaten angewendet sind, kann eine Kopplung zwischen dem digitalen Zwilling und dem Fertigungsprozess hergestellt werden und der Fertigungsprozess durch Starten des digitalen Zwillings ebenfalls entsprechend gestartet werden. Es brauchen somit keinerlei Daten ausgegeben und eingegeben zu werden. Darüber hinaus braucht kein Nutzer die entsprechende Datenübertragung freizugeben beziehungsweise vorzunehmen. Die kommunikationstechnische Kopplung zwischen dem Fertigungsprozess und dem digitalen Zwilling ist vorliegend nicht als Datenausgabe beziehungsweise Dateneingabe zu verstehen.

Darüber hinaus wird vorgeschlagen, dass anhand der Zielvorgabe Vergleichsdaten bestimmt werden, die die Zielvorgabe kennzeichnen, die Ergebnisdaten mit den Vergleichsdaten verglichen werden und ein Ergebnis des Vergleichs bereitgestellt wird. Dadurch ist es auf einfache Weise möglich, eine Information über eine Qualität der Ergebnisdaten zu erhalten. Es kann somit bestimmt werden, ob mit den Ergebnisdaten die Zielvorgabe zuverlässig erreicht werden kann. Dies erleichtert insbesondere eine Entscheidung, ob die Ergebnisdaten für den Fertigungsprozess genutzt werden sollen.

Ferner wird vorgeschlagen, dass unter Nutzung von wenigstens einem statistischen, mathematischen Verfahren eine Variation in Bezug auf den wenigstens einen Startparameter und/oder die wenigstens eine Einstellung ermittelt wird und das Simulationsmodell entsprechend angepasst wird und die Simulation mit der Variation erneut durchgeführt wird. Auf diese Weise ist es möglich, ohne großen Aufwand zusätzliche Simulationen zu realisieren und hierzu entsprechende Ergebnisdaten zu erhalten. Es besteht dann die Möglichkeit, die auf diese Weise erhaltenen unterschiedlichen Ergebnisdaten in Bezug auf die Zielvorgabe miteinander zu vergleichen. Beispielsweise können die in Bezug auf die Zielvorgabe geeignetsten Ergebnisdaten für den zukünftigen Betrieb des Fertigungsprozesses ausgewählt werden. Darüber hinaus ist es möglich, in Bezug auf die Zielvorgabe eine automatisierte Optimierung des Fertigungsprozesses erreichen zu können.

Weiterhin wird vorgeschlagen, dass derjenige Startparameter und/oder diejenige Einstellung ermittelt werden, die eine Veränderung in Bezug auf die Zielvorgabe bewirken, die größer als ein vorgegebener Vergleichswert ist. Es besteht somit die Möglichkeit, Parameter, die sich auf die Zielvorgabe besonders auswirken, identifizieren zu können. Darüber hinaus besteht die Möglichkeit, Parameter beziehungsweise Einstellungen, die sich in Bezug auf die Zielvorgabe nicht oder unwesentlich auswirken, ebenfalls zu identifizieren. Derartige Parameter brauchen zum Beispiel bei einer Variation bei wiederholten Simulationen nicht weiter verändert zu werden.

Darüber hinaus wird vorgeschlagen, dass eine solche Simulation, bei der die Veränderung in Bezug auf die Zielvorgabe kleiner als der vorgegebene Vergleichswert ist, abgebrochen wird. Zeigt sich im Verlaufe einer Simulation, dass die Zielvorgabe in Bezug auf den Vergleichswert nicht erreicht werden kann, kann die Simulation abgebrochen werden. In einem solchen Fall können zum Beispiel entsprechende Ergebnisdaten bereitgestellt werden, die lediglich eine Information in Bezug auf den Abbruch der Simulation enthalten. Darüber hinaus besteht die Möglichkeit, dass die Ergebnisdaten lediglich Werte enthalten, die für den Betrieb der Fertigungseinrichtung nicht relevant sind beziehungsweise den Betrieb des Fertigungsprozesses nicht stören. Vorzugsweise kann eine separate Meldung ausgegeben werden. Diese Meldung kann einem Nutzer angezeigt werden. Darüber hinaus kann die Meldung auch genutzt werden, um Startparameter beziehungsweise Einstellungen entsprechend zu variieren, damit bei einer folgenden Simulation eine Verbesserung erreicht werden kann. Der Vergleichswert kann beispielsweise von einem Nutzer oder auch automatisiert durch ein entsprechendes Betriebssystem bereitgestellt sein.

Es wird ferner vorgeschlagen, dass anhand der Zielvorgabe wenigstens ein Simulationsmodell automatisiert ausgewählt wird. Zu diesem Zweck wird eine Bibliothek beziehungsweise Datenbank mit Simulationsmodellen bereitgestellt. Bei Vorgabe der Zielvorgabe kann die Vorrichtung ein geeignetes Simulationsmodell auswählen. Beispielsweise kann dies anhand von mittels der Zielvorgabe vorgegebenen Parametern erreicht werden. Soll zum Beispiel bei einem Bohrprozess möglichst wenig Energie verbraucht werden, kann ein hierauf spezialisiertes Simulationsmodell ausgewählt werden, welches sich mit dem Energieverbrauch während des Bohrprozesses befasst.

Ferner kann vorgesehen sein, dass anhand der Zielvorgabe zumindest der wenigstens eine Startparameter oder die wenigstens eine Einstellung automatisiert bestimmt werden. Auch hier kann die Vorrichtung entsprechend ausgebildet sein und die Zielvorgabe dazu nutzen, den wenigstens einen Startparameter oder die wenigstens eine Einstellung auszuwählen. Befasst sich die Zielvorgabe zum Beispiel mit einer Bohrgeschwindigkeit, kann als Startparameter die Nutzung eines Bohrers für eine hohe Bohrgeschwindigkeit ausgewählt werden. Bezieht sich die Zielvorgabe zum Beispiel auf einen vorgegebenen Zeitraum, kann vorgesehen sein, dass eine Einstellung in Bezug auf die Simulation diesen Zeitraum abdeckt. Auch Kombinationen hiervon sind möglich. Es können auch mehrere Startparameter oder Einstellungen automatisiert bestimmt werden.

Darüber hinaus wird vorgeschlagen, dass zumindest mehrere Startparameter oder mehrere Einstellungen vorgegeben werden, wobei wenigstens ein Startparameter beziehungsweise eine Einstellung für das Durchführen der Simulation fest vorgegeben wird. Dies ermöglicht es, die Durchführung der Simulation auf relevante Aspekte zu fokussieren. Beispielsweise kann die Toleranz einer Bohrung von einer Bohrgeschwindigkeit und/oder einem Vorschub abhängig sein. Durch eine Vorgabe einer unveränderlichen Toleranz beziehungsweise eines Bohrdurchmessers kann vermieden werden, dass dieser Parameter während der Simulation oder während mehrerer Simulationen verändert wird. Gleiches kann entsprechend für die Einstellung in Bezug auf das Durchführen der Simulation vorgesehen sein. Insgesamt kann die Verfahrensführung dadurch weiter verbessert werden.

Gemäß einer Weiterbildung wird vorgeschlagen, dass während des Betreibens des Simulationsmodells zu wenigstens einem vorgegebenen Zeitpunkt oder bei Erreichen von wenigstens einer vorgegebenen Bedingung ein Einzeldatensatz erzeugt wird, der zeitspezifische Simulationsdaten in Bezug auf den wenigstens einen Zeitpunkt beziehungsweise bedingungsspezifische Simulationsdaten in Bezug auf die wenigstens eine vorgegebene Bedingung aufweist. Hierdurch ist es möglich, zum jeweiligen vorgegebenen Zeitpunkt beziehungsweise bei Eintreten der jeweiligen vorgegebenen Bedingung vorliegende Zustandsdaten der Simulation zu erfassen und zu speichern. Dadurch ist es unter anderem möglich, anhand des Einzeldatensatzes die Simulation ergänzend zu untersuchen. Besonders vorteilhaft können bei weiteren unterschiedlichen Simulationen entsprechende Einzeldatensätze erzeugt werden, die es ermöglichen, jeweilige Simulationszustände miteinander zu vergleichen. Der Vergleich kann entweder automatisiert oder auch manuell durch einen Nutzer erfolgen.

Darüber hinaus wird vorgeschlagen, dass abhängig von den zeitspezifischen beziehungsweise bedingungsspezifischen Simulationsdaten der wenigstens eine Startparameter, die wenigstens eine Einstellung und/oder das wenigstens eine Simulationsmodell automatisiert verändert werden und das Simulationsmodell erneut betrieben wird. Dies ermöglicht es, anhand spezifischer Einzeldatensätze eine Anpassung vorzunehmen, um eine Optimierung des Fertigungsprozesses automatisiert erreichen zu können. Die Einzeldatensätze können somit wichtige automatisiert auswertbare Hinweise liefern, mittels welchen eine Verbesserung beziehungsweise eine Verbesserung des Unterstützens des Fertigungsprozesses erreicht werden kann.

Weiterhin wird vorgeschlagen, dass, insbesondere sämtliche, Simulationsdaten zum Trainieren eines neuronalen Netzes einer Rechnereinheit genutzt werden, welche zum Betreiben der Simulation dient, wobei das neuronale Netz wenigstens mit dem Fertigungsprozess oder mit dem digitalen Zwilling gekoppelt wird. Die Rechnereinheit kann die Rechnereinheit sein, mit der auch die Simulation durchgeführt wird. Es kann auch eine separate Rechnereinheit sein, die vorzugsweise nur das neuronale Netz realisiert. Hierdurch ist es möglich, den Fertigungsprozess beziehungsweise den digitalen Zwilling weiter zu verbessern. Das auf diese Weise trainierte neuronale Netz kann zum Steuern des digitalen Zwillings beziehungsweise des Fertigungsprozesses genutzt werden. Zu diesem Zweck kann eine entsprechende kommunikationstechnische Kopplung vorgesehen sein. Mittels des neuronalen Netzes beziehungsweise eines künstlichen neuronalen Netzwerks kann der digitale Zwilling gegebenenfalls weiter präzisiert werden in Bezug auf den Fertigungsprozess. Insgesamt kann die Unterstützung des Fertigungsprozesses weiter verbessert werden.

Hier und im Folgenden kann ein künstliches neuronales Netzwerk als Softwarecode verstanden werden, der auf einem computerlesbaren Speichermedium gespeichert ist und eines oder mehrere vernetzte künstliche Neuronen repräsentiert beziehungsweise deren Funktion nachbilden kann. Der Softwarecode kann dabei auch mehrere Softwarecodekomponenten beinhalten, die beispielsweise unterschiedliche Funktionen haben können. Insbesondere kann ein künstliches neuronales Netzwerk ein nichlineares Modell oder einen nichtlinearen Algorithmus implementieren, das beziehungsweise der eine Eingabe auf eine Ausgabe abbildet, wobei die Eingabe durch einen Eingangsmerkmalsvektor oder eine Eingangssequenz gegeben ist und die Ausgabe beispielsweise eine ausgegebene Kategorie für eine Klassifizierungsaufgabe, einen oder mehrere prädizierte Werte oder eine prädizierte Sequenz beinhalten kann.

Der digitale Zwilling kann eine selbstlernende Einheit sein, die initial anhand von Trainingsdatensätzen auf Basis von wenigstens einem Modell trainiert wird. Das Modell kann zum Beispiel durch ein oder mehrere neuronale Netze, Partial Least Squares, kernel-basierte Verfahren und/oder andere Verfahren des maschinellen Lernens gebildet sein. Die Einheit umfasst vorzugsweise eine Hardwareschaltung, die insbesondere eine programmgesteuerte Rechnereinheit umfassen kann. Die Rechnereinheit wird mittels eines Rechnerprogramms derart gesteuert, dass sie die gewünschte Funktionalität bereitzustellen vermag.

Das Trainieren der Einheit erfolgt mittels Trainingsdatensätzen, die ein jeweiliges Trainingssensorsignal mit einem jeweils zugeordneten Betriebszustand des Fertigungsprozesses umfassen. Vorzugsweise wird eine große Anzahl von Trainingsdatensätzen genutzt, um die selbstlernende Einheit zu trainieren.

Die Trainingsdatensätze können anhand von spezifischen Betriebszuständen des Fertigungsprozesses gewonnen werden. Vorzugsweise umfassen die Trainingsdatensätze Daten von einer Mehrzahl von unterschiedlichen Betriebszuständen und/oder möglichst vielen unterschiedlichen Fertigungsprozessen. Die Trainingsdatensätze können in einer geeigneten Datenbank gespeichert sein, die mit der Einheit in Kommunikationsverbindung steht. Natürlich kann die Datenbank zumindest teilweise auch von der Einheit umfasst sein.

Die für das erfindungsgemäße Verfahren angegebenen Vorteile und Wirkungen gelten gleichermaßen auch für das erfindungsgemäße Rechnerprogrammprodukt, den erfindungsgemäßen Datenträger sowie die erfindungsgemäße Vorrichtung und umgekehrt. Daher können Verfahrensmerkmale sowohl als Vorrichtungsmerkmale wie auch umgekehrt formuliert sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Bei den im Folgenden erläuterten Ausführungsbeispielen handelt es sich um bevorzugte Ausführungsformen der Erfindung. Die vorhergehend in der Beschreibung angegebenen Merkmale, Merkmalskombinationen sowie auch die in der folgenden Beschreibung von Ausführungsbeispielen genannten und/oder in den Figuren alleine gezeigten Merkmale und Merkmalskombinationen sind nicht nur in der jeweils angegebenen Kombination, sondern auch in anderen Kombinationen verwendbar. Es sind somit auch Ausführungen von der Erfindung umfasst beziehungsweise als offenbart anzusehen, die in den Figuren nicht explizit gezeigt und erläutert sind, jedoch durch separierte Merkmalskombinationen aus den erläuterten Ausführungsformen hervorgehen und erzeugbar sind. Die anhand der Ausführungsbeispiele dargestellten Merkmale, Funktionen und/oder Wirkungen können für sich genommen jeweils einzelne, unabhängig voneinander zu betrachtende Merkmale, Funktionen und/oder Wirkungen der Erfindung darstellen, welche die Erfindung jeweils auch unabhängig voneinander weiterbilden. Daher sollen die Ausführungsbeispiele auch andere Kombinationen als die in den erläuterten Ausführungsformen umfassen. Darüber hinaus können die beschriebenen Ausführungsformen auch durch weitere der bereits beschriebenen Merkmale, Funktionen und/oder Wirkungen der Erfindung ergänzt sein.

In den Figuren bezeichnen gleiche Bezugszeichen gleiche Merkmale und Funktionen.

Es zeigen:
FIG 1 eine schematische Darstellung einer Kopplung eines industriellen Fertigungsprozesses mit einem digitalen Zwilling;
FIG 2 eine schematische Blockdarstellung zur Erzeugung von Varianten zu Simulationsmodellen;
FIG 3 eine schematische Blockdarstellung eines Ablaufs zum Betreiben der Simulationsmodelle; und
FIG 4 eine schematische Blockdarstellung zum Durchführen einer Simulation zur Unterstützung des Fertigungsprozesses.

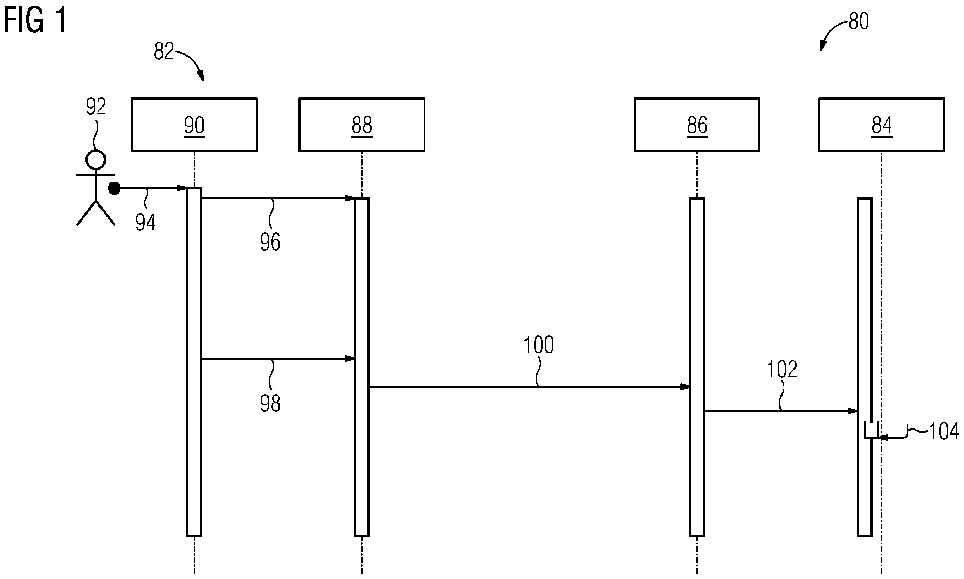

FIG 1 zeigt in einem Ausführungsbeispiel eine schematische Darstellung einer Kopplung eines industriellen Fertigungsprozesses 82 mit einem digitalen Zwilling 84. Es ist eine Vorrichtung 80 vorgesehen, die zum Unterstützen des industriellen Fertigungsprozesses 82 dient. Die Vorrichtung 80 ist ausgebildet, den digitalen Zwilling 84 bereitzustellen und den digitalen Zwilling 84 mit dem Fertigungsprozess 82 zu koppeln, wobei der digitale Zwilling 84 derart konfiguriert wird, dass der digitale Zwilling 84 ein Verhalten des Fertigungsprozesses 82 nachbildet.

Der Fertigungsprozess 82 umfasst einen Leitstand 90, von dem aus der Fertigungsprozess 82 in vorgebbarer Weise gesteuert werden kann. Der Fertigungsprozess 82 umfasst ferner ein Fertigungsnetzwerk 88, welches ein Kommunikationsnetzwerk bereitstellt. An das Fertigungsnetzwerk 88 sind nicht dargestellte Fertigungseinrichtungen angeschlossen, die vom Leitstand 90 aus über das Fertigungsnetzwerk 88 entsprechend gesteuert werden können.

In einer Ausgestaltung ist vorgesehen, dass die Fertigungseinrichtung durch eine Bohrvorrichtung gebildet ist, die einen Roboter aufweist, mittels dem in einem Werkstück eine Bohrung mit einem vorgegebenen Bohrdurchmesser in einer vorgegebenen Bohrtiefe hergestellt werden kann. Mit dem Fertigungsnetzwerk 88 kann somit ein reales Objekt hergestellt werden. Das Fertigungsnetzwerk 88 kann zu diesem Zweck unter anderem den Roboter als reales Objekt aufweisen, mittels dem der gewünschte Fertigungsprozess durchgeführt werden kann.

Die Vorrichtung 80 weist ferner den digitalen Zwilling 84 auf, der Zwillingsdaten umfasst, die mit dem realen Objekt, hier dem Roboter, der die entsprechende Bohrung herstellt, gekoppelt ist. Der digitale Zwilling 84 entspricht daher einem digitalen Abbild des den Fertigungsprozess 82 durchführenden Roboters.

Der Leitstand 90 sowie der Roboter des Fertigungsnetzwerks 88 stehen in Kommunikationsverbindung miteinander. Das Fertigungsnetzwerk 88 sowie der digitale Zwilling 84 stehen ferner über ein Kommunikationsnetzwerk 86 miteinander in Kommunikationsverbindung.

Der Leitstand 90 stellt eine Nutzerschnittstelle für einen Nutzer 92 bereit, über den der Nutzer Zustandsinformationen über den Fertigungsprozess 82 erhalten kann. Darüber hinaus kann der Nutzer 92 über die Nutzerschnittstelle Steuerbefehle eingeben, um den Fertigungsprozess 82 zu steuern beziehungsweise zu beeinflussen.

In FIG 1 ist dargestellt, dass der Leitstand 90 Konfigurationsdaten 96 an das Fertigungsnetzwerk 88, insbesondere an den Roboter, übermittelt. Die Konfigurationsdaten 96 betreffen den geplanten Fertigungsprozess 82, hier das Anfertigen der vorgenannten Bohrung. Die Konfigurationsdaten 96 beziehen sich auf den spezifischen Fertigungsprozess 82 mittels des Fertigungsnetzwerks 88 und insbesondere auf den Einsatz des Roboters, der vom Fertigungsnetzwerk 88 umfasst ist.

Darüber hinaus sendet der Leitstand 90 ein Startsignal 98 an das Fertigungsnetzwerk 88, woraufhin das Fertigungsnetzwerk 88 den vorgesehenen Herstellprozess startet. Hierbei werden Zustandsdaten 100 des Fertigungsprozesses 82 ermittelt und an das Kommunikationsnetzwerk 86 übermittelt. Das Kommunikationsnetzwerk 86 übermittelt die Zustandsdaten 100 als Zustandsdatenübermittlung 102 an den digitalen Zwilling 84. Der digitale Zwilling 84 wird anhand der mit der Zustandsdatenübermittlung 102 übermittelten Zustandsdaten 100 aktualisiert. Die Aktualisierung des digitalen Zwillings 84 erfolgt bei 104. Dieser Vorgang wird beliebig oft wiederholt, sodass der digitale Zwilling 84 zumindest zu vorgebbaren Zeitpunkten, vorzugsweise permanent, im Wesentlichen dem Fertigungsprozess 82 entspricht beziehungsweise diesen nachbildet.

Die Erfindung ermöglicht es nunmehr, den Fertigungsprozess 82 zu unterstützen, insbesondere hinsichtlich vorgebbarer Eigenschaften zu verbessern beziehungsweise zu optimieren. Zu diesem Zweck ist vorgesehen, Simulationen 10, 12, 14, 16, 18 zu realisieren, mittels denen es dem Nutzer ermöglicht wird, eine oder mehrere Varianten von Simulationen durchzuführen. Ausgangspunkt ist dabei vorliegend ein spezifisches Simulationsmodell, welches eine vorgegebene Parametrierung und einen passenden Simulationsalgorithmus aufweist. Die Parametrierung basiert auf Daten, die vom realen Fertigungsprozess 82 erfasst wurden. Dabei können Varianten einer vorhandenen Simulation dadurch erstellt werden, dass ausgehend von einem vorhandenen Simulationsmodell, Teile des Simulationsmodells und/oder Parameter und/oder Simulationseinstellungen, wie zum Beispiel ein Interpolationsverhalten, eine Simulationstiefe und/oder dergleichen, verändert werden. Dadurch können Simulationsvarianten erreicht werden, die zumindest teilweise auch automatisiert erstellt werden können. Es ist möglich, dem Nutzer eine Übersicht über erstellte Varianten zu Simulationsmodellen in Form einer Übersicht bereitzustellen. Zusätzlich können Unterschiede zwischen den Varianten der Simulationsmodelle untereinander oder zwischen einer Ausgangssimulation und davon abgeleiteten Varianten bereitgestellt werden.

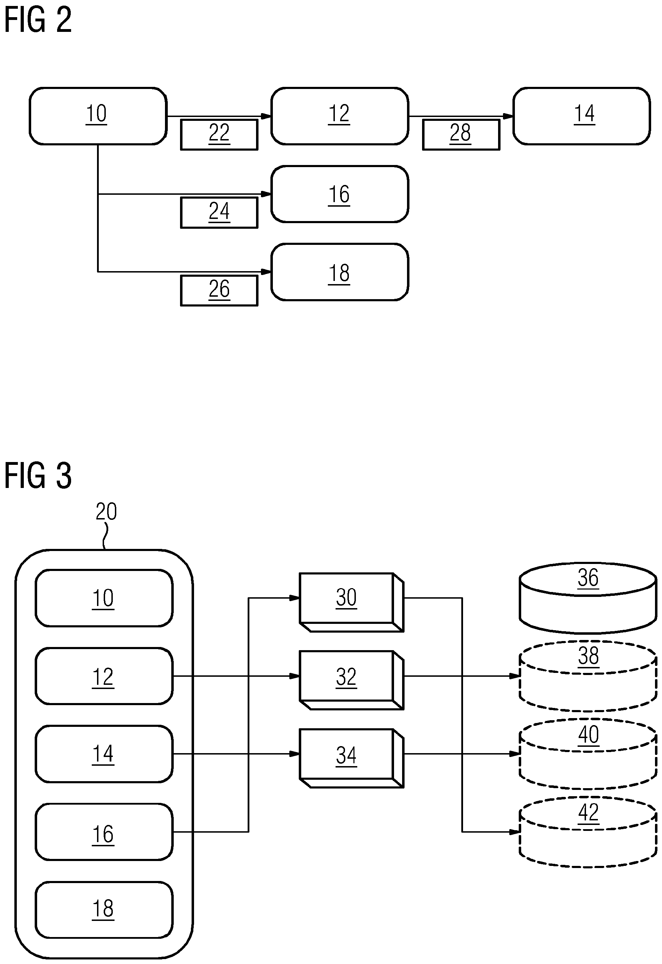

FIG 2 zeigt in einer schematischen Blockdarstellung einen Verfahrensablauf zur Erzeugung von Varianten zu Simulationsmodellen. In FIG 2 ist eine Simulation 10 dargestellt, die durch Betrieb eines ersten Simulationsmodells mit ersten Parametern und ersten Einstellungen erzeugt ist. Durch Variation von Einstellungen 22 kann eine zweite Simulation 12 erzeugt werden, die ebenfalls auf dem ersten Simulationsmodell und den ersten Parametern beruht. Ausgehend von der Simulation 12 kann durch eine Modellvariation 28 des Simulationsmodells eine dritte Simulation 14 erzeugt werden, bei der ein zweites Simulationsmodell basierend auf den ersten Parametern und den zweiten Einstellungen betrieben wird. Ferner kann ausgehend von der ersten Simulation 10 unter Durchführung einer Parametervariation 24 eine vierte Simulation 16 erzeugt werden, die auf dem ersten Simulationsmodell, den zweiten Parametern sowie den ersten Einstellungen basiert. Darüber hinaus kann ausgehend von der ersten Simulation 10 eine fünfte

Simulation 18 erzeugt werden, die auf einer Einstellungs- und Parametervariation 26 basiert. Zu diesem Zweck kann das erste Simulationsmodell basierend auf dritten Parametern und dritten Einstellungen betrieben werden, um zur Simulation 18 zu gelangen.

FIG 3 zeigt in einer weiteren schematischen Blockdarstellung einen Ablauf zum Betreiben der in FIG 2 bereitgestellten Simulationen 10 bis 18. Die Simulationen 10 bis 18 sind in Form einer Ausführungsschlange in einer Ausführung 20 vorgesehen. In dieser Ausgestaltung ist vorgesehen, dass die Rechnereinheit durch drei Rechnereinheiten 30, 32, 34 gebildet ist, die zur Durchführung einer jeweiligen der Simulationen 10 bis 18 ausgebildet ist. Jede Rechnereinheit 30, 32, 34 kann mehrere Rechenkerne aufweisen, in einem Verbund oder in einer Cloud realisiert sein. Dadurch ist es möglich, zumindest teilweise unterschiedliche Simulationen gleichzeitig betreiben zu können. Darüber hinaus ist es auch möglich, eine automatische Durchführung des Betreibens der Simulationen nacheinander zu realisieren, ohne dass der Nutzer eine jeweilige Simulation auszulösen braucht.

Aus FIG 3 ist ersichtlich, dass die Simulation 10 bereits durchgeführt worden ist. Die Simulation 12 wird mittels der Rechnereinheit 32 betrieben. Die Simulation 14 wird mittels der Rechnereinheit 34 betrieben und die Simulation 16 wird mittels der Rechnereinheit 30 betrieben. Die Simulation 18 ist mangels Rechnerkapazität noch nicht im Betrieb. Entsprechend liegt für die Simulation 10 bereits ein Ergebnisdatensatz 36 vor, der wegen der bereits durchgeführten Simulation 10 vollständig ist. Für die Simulationen 12 bis 16 sind entsprechende Ergebnisdatensätze 38, 40, 42 vorhanden, die jedoch aufgrund der jeweils laufenden Simulation noch nicht abgeschlossen sind. Für die Simulation 18 ist noch kein Ergebnisdatensatz angelegt, weil die Simulation noch nicht angelaufen ist.

Mit den Ergebnisdatensätzen 36, 38, 40, 42 kann eine Aufzeichnung eines jeweiligen Simulationsablaufs realisiert werden. Die Aufzeichnung umfasst vorzugsweise Zustandsdaten, Traces zu ausgewählten Zeitpunkten, beispielsweise einem Start der jeweiligen Simulation, Initialwerte der jeweiligen Simulation und/oder dergleichen. Die Aufzeichnung kann Zustände der jeweiligen Simulation zu unterschiedlichen Zeitpunkten umfassen, die automatisiert oder durch den Nutzer 92 vorgegeben werden können. Automatisiert können Zeitpunkte zum Beispiel durch bestimmte Ereignisse, die ebenfalls vorgegeben werden können, und die während der Simulation auftreten können, bestimmt sein. Darüber hinaus können die Ergebnisdatensätze 36, 38, 40, 42 auch Daten und Informationen in Bezug auf den Fertigungsprozess 82, insbesondere beispielsweise ein herzustellendes Werkstück, ein Werkzeug zur Herstellung des Werkstücks und/oder dergleichen umfassen.

Zur Verfahrensdurchführung ist vorgesehen, dass zunächst der digitale Zwilling 84 erzeugt wird, so wie es anhand von FIG 1 erläutert worden ist. Der digitale Zwilling 84 wird sodann vom Fertigungsprozess 82 entkoppelt. Für den Fertigungsprozess 82 wird eine Zielvorgabe 50 vorgegeben und es wird abhängig vom digitalen Zwilling 84 ein Simulationsmodell vorgeben. Für das Simulationsmodell werden Simulationseinstellungen, wie zum Beispiel Interpolationsverhalten, Simulationstiefe, Stützstellen während der Simulation und/oder dergleichen ebenfalls vorgegeben. Die Zielvorgabe 50 kann zum Beispiel eine Qualität beziehungsweise Genauigkeit, eine Geschwindigkeit für den Fertigungsprozess 82, einen Energieverbrauch, einen Verschleiß, insbesondere in Bezug auf ein oder mehrere Werkzeuge, oder dergleichen sein.

Sodann werden Parameter vorgegeben, beispielsweise in Bezug auf den Bohrprozess ein Bohrertyp, ein Vorschub des Bohrers, eine Drehzahl des Bohrers, ein Kühl- beziehungsweise Schmiermittel und/oder dergleichen. Das Simulationsmodell wird sodann mit den Startparametern und den Einstellungen numerisch mittels der Rechnereinheiten 30, 32, 34 als Simulation betrieben. Aus dem Betrieb des Simulationsmodells in Bezug auf die Zielvorgabe 50 werden Ergebnisdaten ermittelt, zum Beispiel die Ergebnisdatensätze 36, 38, 40, 42.

Die Startparameter können vorliegend vom digitalen Zwilling 84 übernommen werden. Mit der Zielvorgabe 50 können auch Parameter vorgegeben werden, die während der Simulation nicht verändert werden sollen, beispielsweise ein Material beziehungsweise Werkstoff, in dem die Bohrung angeordnet werden soll, ein Durchmesser der Bohrung, eine Bohrtiefe und/oder dergleichen.

Die Ergebnisdatensätze 36, 38, 40, 42 werden sodann für einen zukünftigen Betrieb des Fertigungsprozesses 82 bereitgestellt.

Das Bereitstellen der Ergebnisdaten in Form der Ergebnisdatensätze 36, 38, 40, 42 kann dadurch erfolgen, dass die Ergebnisdaten in jeweiligen Dateien zur Verfügung gestellt werden, die über den Leitstand 90 in den Fertigungsprozess 92 eingeführt werden können. Darüber hinaus besteht auch die Möglichkeit, die Ergebnisdaten 36, 38, 40, 42 dem digitalen Zwilling 84 zur Verfügung zu stellen, diesen entsprechend anzupassen und sodann den digitalen Zwilling 84 mit dem Fertigungsprozess 82 wieder zu koppeln.

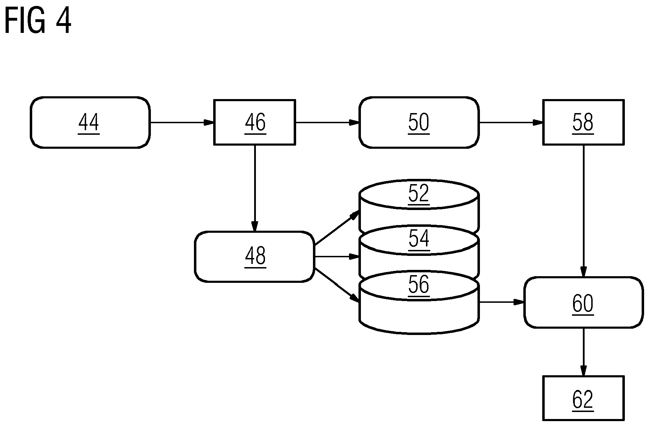

FIG 4 zeigt in einer schematischen Blockdarstellung einen möglichen Ablauf zur Unterstützung des Fertigungsprozesses 82. Unterstützung umfasst vorliegend unter anderem eine Verbesserung und/oder eine Optimierung des Fertigungsprozesses 82.

Mit 44 ist eine Variantendatenbank dargestellt, in der Varianten zu einem Simulationsmodell gespeichert sind, wie sie zum Beispiel gemäß FIG 2 erzeugt worden sind. Aus der Variantendatenbank 44 wird eine Variante eines Simulationsmodells 46 ausgewählt. Das Simulationsmodell 46 wird dann mittels der Rechnereinheiten 30, 32, 34 bei 48 betrieben. Aus dem Betrieb des Simulationsmodells 46 ergeben sich Einzeldatensätze 52, 54, 56 die zumindest teilweise auch als Ergebnisdatensätze genutzt werden können.

Unter Berücksichtigung des Modells 46 und des digitalen Zwillings 84 wird die Zielvorgabe 50 bestimmt. Anhand der Zielvorgabe 50 wird ermittelt, welche Daten der Einzeldatensätze 52, 54, 56 für das Bereitstellen des Ergebnisdatensatzes bei 62 vorgesehen werden. Bei 60 werden die Einzeldatensätze 52, 54, 56 anhand des bei 58 ermittelten Datenumfangs des bereitzustellenden Ergebnisdatensatzes verarbeitet. Es wird der bereitzustellende Ergebnisdatensatz ermittelt bei 62 wird der Ergebnisdatensatz dann bereitgestellt, wie zuvor erläutert.

Darüber hinaus besteht die Möglichkeit, zusätzliche Informationen zum Simulationsmodell 46 bereitzustellen, beispielsweise eine Semantik, einen Beschreibungstyp, eine Bedeutung von Modellparametern und/oder dergleichen.

Bei 50 kann ferner eine Sensitivitätsanalyse durchgeführt werden. Dies kann zum Beispiel umfassen, dass ein oder mehrere Parameter fest vorgegeben werden. Es kann aber alternativ oder ergänzend auch umfassen, dass die Parameter für die Simulation gekennzeichnet werden, die sich auf die Simulation und den digitalen Zwilling 84 beziehungsweise den Fertigungsprozess 82 besonders auswirken.

Bei 60 können ferner ein Vorschlag für die Art der Bereitstellung der Ergebnisdaten, eine Information bezüglich der Sensitivität, spezifische Betriebsparameter für den Fertigungsprozess 82 und/oder dergleichen berücksichtigt werden. Darüber hinaus können die Ergebnisdaten auch Informationen bezüglich betriebsrelevanter Zustände während des Betriebs des Fertigungsprozesses 82 umfassen, beispielswiese einen Hotspot und/oder dergleichen.

Gemäß einem weiteren Ausführungsbeispiel kann vorgesehen sein, dass die Vorrichtung 80 über eine Bibliothek beziehungsweise Datenbank von Simulationsmodellen verfügt. Zu den Simulationsmodellen ist vorzugsweise eine Beschreibung vorhanden, die von der Vorrichtung 80 semantisch ausgewertet werden kann, sodass die Vorrichtung 80 mögliche Einsatzszenarien zuordnen kann. Der Nutzer 92 bestimmt die Zielvorgabe 50, zum Beispiel ein Optimierungsziel und gibt variable sowie fixe Parameter vor. Diese Daten werden der Vorrichtung 80 entsprechend geeignet zur Verfügung gestellt.

In Bezug auf den Bohrprozess kann die Zielvorgabe 50 zum Beispiel sein, dass ein Bohrerdurchmesser mit einer Toleranz von 0,02 Prozent in Bezug innerhalb einer möglichst kurzen Zeit zwischen Beginn und Ende des Herstellens der Bohrung durchgeführt wird. Die Vorrichtung 80 wählt zulässige Simulationsmodelle anhand bekannter ähnlicher Aufgaben mit ähnlichen Randbedingungen aus. Die Vorrichtung 80 erkennt mindestens ein Simulationsmodell für das Szenario "Bohrung in das Werkstück" und nutzt die vom Nutzer 92 vorgegebenen Parameter, beispielsweise den Bohrdurchmesser und dergleichen. Die Vorrichtung 80 wählt eine Startparametrierung für die gegebenen veränderlichen Parameter für jedes der Simulationsmodelle und übernimmt die fixen Parameter. Die Vorrichtung 80 bestimmt Simulationseinstellungen für jedes der Simulationsmodelle aufgrund bekannter ähnlicher Aufgaben mit ähnlichen Randbedingungen. Die Vorrichtung 80 führt in einem ersten Iterationsschritt die Simulationsmodelle - wie anhand von FIG 3 erläutert - aus. Dazu werden die entsprechenden Rechnereinheiten 30, 32, 34 als Ressourcen allokiert.

Die Vorrichtung 80 speichert die Ergebnisse der Simulationen 10, 12, 14, 16, 18 und bewertet die Ergebnisse bezüglich der Zielvorgabe 50. Die Vorrichtung 80 bestimmt die relevanten Daten, beispielsweise aufgrund von signifikanten Unterschieden bei den Simulationen 10, 12, 14, 16, 18 in Bezug auf die Zielvorgabe 50. Die Vorrichtung 80 findet für diese Informationen eine geeignete Bereitstellung des jeweiligen Ergebnisdatensatzes 36, 38, 40, 42. Dies kann anhand der Struktur der Daten und ihrer Interpretation durch die Vorrichtung 80 erfolgen, zum Beispiel in Bezug auf einen Frequenzbereich für Abweichungen in einem Spektrum, eine Heat-Map für mehrdimensionale Daten und/oder dergleichen. Hierzu können die zuvor vorgegebenen Datenbeschreibungen für Parameter und Optimierungsziele beziehungsweise die Zielvorgabe genutzt werden.

In einer alternativen Ausgestaltung ist vorgesehen, dass der Nutzer 92 die Zielvorgabe 50 vorgibt, beispielsweise den Bohrprozess. Die Zielvorgabe 50, zum Beispiel die Zeitdauer und eine Energieeffizienz, veränderliche und fixe Parameter, zum Beispiel ein Bohrdurchmesser, eine Tiefe der Bohrung, ein Werkstoff, in dem die Bohrung angeordnet werden soll und/oder dergleichen. Diese Daten werden der Vorrichtung 80 in geeigneter Weise zur Verfügung gestellt.

Ebenso kann der Nutzer 92 angeben, dass ein Signal im Frequenzbereich berücksichtigt werden soll. Der Nutzer 92 wählt ein geeignetes Simulationsmodell 46. Es können auch mehrere Simulationsmodelle gewählt sein. Das Simulationsmodell wird anhand bekannter Aufgaben mit ähnlichen Randbedingungen vom Nutzer 92 ausgewählt. Der Nutzer 92 wählt ferner eine Startparametrierung für die veränderbaren Parameter für jedes Simulationsmodell 46, zum Beispiel eine Drehzahl, einen Vorschub, einen Bohrertyp, ein Kühl- und Schmiermittel und/oder dergleichen. Ferner kann der Nutzer 92 Simulationseinstellungen modellabhängig für jedes der Simulationsmodelle 46 vorgeben. Dies kann zum Beispiel umfassen, wie Zeitschritte für die jeweilige Simulation zu wählen sind.

Die Vorrichtung 80 führt in einem ersten Iterationsschritt die Simulationsmodelle 46 aus und sammelt die Ergebnisdaten der verschiedenen Simulationen 10, 12, 14, 16, 18 ein. Die Vorrichtung 80 bewertet die Ergebnisdaten zum Beispiel in Bezug auf einen Zeitraum der Bohrbearbeitung anhand von einer Zeitdifferenz zwischen einem Beginn des Bohrprozesses und einem Beenden des Bohrprozesses, beispielswiese Eintauchen und Zurückziehen des Bohrers und/oder dergleichen.

Die Vorrichtung 80 bewertet die Ergebnisdaten in Bezug auf die Zielvorgabe 50 und kann zum Beispiel eine Sortierung nach der Zeitdauer vorsehen. Die Vorrichtung 80 wählt die relevanten Informationen aufgrund von signifikanten Unterschieden in den Simulationen 10, 12, 14, 16, 18 und in Bezug auf die

Zielvorgabe 50 aus, beispielsweise in Bezug auf die erforderliche Energie. Die Vorrichtung 80 wählt eine geeignete Bereitstellung der Ergebnisdaten aus, beispielsweise aufgrund einer Struktur der Daten und ihrer Interpretation, zum Beispiel Abweichungen im Spektrum des Frequenzbereiches, der Heat-Map für mehrdimensionale Daten und/oder dergleichen. Dieser Vorschlag berücksichtigt die Daten und die Zielvorgabe in Bezug auf die Parameter. Der Nutzer 92 analysiert und bewertet die Ergebnisdatensätze 36, 38, 40, 42 und entscheidet über die weitere Funktion der Vorrichtung 80 oder einen Abbruch der weiteren Funktion, beispielsweise weil die Zielvorgabe 50 ausreichend erreicht worden ist.

Gemäß einer weiteren Ausgestaltung bestimmt der Nutzer 92 ein Simulationsmodell 46, veränderliche und fixe Parameter sowie eine Zielvorgabe 50. Der Nutzer 92 wählt wieder Startwerte für die veränderlichen Parameter und bestimmt Werte für die fixen Parameter. Die weiteren Schritte - wie zum vorhergehenden Ausführungsbeispiel erläutert - werden von der Vorrichtung 80 durchgeführt. Dabei kann die Vorrichtung 80 Optimierungsalgorithmen nutzen, die zum Beispiel mathematische Methoden wie Regression, statistische Verfahren und/oder dergleichen berücksichtigen. Dabei kann ferner berücksichtigt werden, dass, wenn die Vorrichtung 80 erkennt, dass gegebenenfalls ein Parameter bei weiteren Iterationsschritten keine signifikante Änderung in Bezug auf die Zielvorgabe 50 bewirkt, der Parameter als nicht signifikant bestimmt wird.

Mit der Erfindung ist es möglich, eine automatisierte, flexible und abstrahierte Analyse- und Vergleichsmöglichkeit diverser Parameter beziehungsweise Simulationsmodellvarianten in Form von digitalen Zwillingen 84 für Fertigungsprozesse 82 zu erzeugen. In Bezug auf das im Stand der Technik übliche Vorgehen kann somit ein deutlich reduzierter Aufwand, insbesondere auch in Bezug auf Anforderungen an den Nutzer 92, erreicht werden. Auf einfache Weise können kritische Einflussgrößen des Fertigungsprozesses 82 über automatisierte Variantenvergleiche bei einer beliebigen Anzahl von digitalen Zwillingen 84 des Fertigungsprozesses 82 ermittelt und für den Nutzer 92 bereitgestellt werden. Manueller Aufwand kann reduziert und hochqualifiziertes Personal kann eingespart werden. Dadurch können Fehlerquellen und Mängel bei einer Analyse durch Personal ebenfalls reduziert werden.

Weiterhin können sich wiederholende Muster oder Beobachtungen mit ähnlichen Aufgabenstellungen als Vorlage gespeichert oder zur genaueren Untersuchung automatisiert gesichert werden, beispielsweise indem ein Einzeldatensatz erzeugt wird, wenn an einer vorgegebenen Stelle ein vorgegebener Temperaturwert überschritten wird oder dergleichen. Darüber hinaus ist es möglich, die digitalen Zwillinge 84 zu unterschiedlichen Zeitpunkten miteinander zu vergleichen, um zum Beispiel Veränderungen identifizieren zu können.

Darüber hinaus können einzelne Kenngrößen, wie zum Beispiel eine Emission von CO₂ für den zukünftigen Betrieb des Fertigungsprozesses 82 gezielt über die Auswertung der Varianten in Bezug auf den digitalen Zwilling 84 optimiert werden. Dadurch kann auch erreicht werden, dass häufige Problem- und Aufgabenstellungen beispielsweise bei der Instandhaltung von Maschinen und Anlagen automatisiert analysiert werden können. Damit kann die Analyse und Optimierung zum Beispiel durch ein Instandhaltungspersonal durchgeführt werden, welches keine tiefgreifenden Kenntnisse über den Fertigungsprozess 82 oder die Anlage zu besitzen braucht. Mit der Erfindung können dem Nutzer 92 spezifische Vorschläge präsentiert werden, welche zur Beseitigung eines Problems angewendet werden können.

Die Ausführungsbeispiele dienen ausschließlich der Erläuterung der Erfindung und sollen diese nicht beschränken.

## Patentansprüche

1. Verfahren zum Unterstützen eines industriellen Fertigungsprozesses (82), wobei
- der Fertigungsprozess (82) mit einem digitalen Zwilling (84) gekoppelt wird, wobei der digitale Zwilling (84) ein Verhalten des Fertigungsprozesses (82) nachbildet,
- der digitale Zwilling (84) vom Fertigungsprozess (82) entkoppelt wird,
- abhängig vom digitalen Zwilling (84) wenigstens ein Simulationsmodell (46), wenigstens ein Startparameter für das jeweilige Simulationsmodell (46), wenigstens eine Einstellung für das jeweilige Simulationsmodell (46) sowie eine Zielvorgabe (50) für ein Ergebnis des Fertigungsprozesses (82) vorgegeben werden,
- das wenigstens eine Simulationsmodell (46) mit dem wenigstens einen Startparameter und der wenigstens einen Einstellung numerisch mittels einer Rechnereinheit (30, 32, 34) als Simulation betrieben (48) wird,
- Ergebnisdaten (36, 38, 40, 42) aus dem Betrieb (48) des Simulationsmodells (46) in Bezug auf die Zielvorgabe (50) ermittelt werden, und
- die Ergebnisdaten (36, 38, 40, 42) für einen zukünftigen Betrieb des Fertigungsprozesses (82) bereitgestellt (62) werden.

2. Verfahren nach Anspruch 1, **dadurch gekennzeichnet, dass** das Bereitstellen (62) der Ergebnisdaten (36, 38, 40, 42) umfasst, dass die Ergebnisdaten (36, 38, 40, 42) beim digitalen Zwilling (84) angewendet werden und der digitale Zwilling (84) mit dem Fertigungsprozess (82) gekoppelt wird.

3. Verfahren nach einem der vorhergehenden Ansprüche, **dadurch gekennzeichnet, dass** anhand der Zielvorgabe (50) Vergleichsdaten bestimmt werden, die die Zielvorgabe (50) kennzeichnen, die Ergebnisdaten mit den Vergleichsdaten verglichen werden und ein Ergebnis des Vergleichs bereitgestellt wird.

4. Verfahren nach einem der vorhergehenden Ansprüche, **dadurch gekennzeichnet, dass** unter Nutzung von wenigstens einem statistischen mathematischen Verfahren eine Variation (22, 24, 26) in Bezug auf den wenigstens einen Startparameter und/oder die wenigstens eine Einstellung ermittelt wird und das Simulationsmodell (46) entsprechend angepasst wird und die Simulation mit der Variation (22, 24, 26) erneut durchgeführt wird.

5. Verfahren nach einem der vorhergehenden Ansprüche, **dadurch gekennzeichnet, dass** derjenige Startparameter und/oder diejenige Einstellung ermittelt werden, die eine Veränderung in Bezug auf die Zielvorgabe (50) bewirken, die größer als ein vorgegebener Vergleichswert ist.

6. Verfahren nach einem der vorhergehenden Ansprüche, **dadurch gekennzeichnet, dass** eine solche Simulation, bei der die Veränderung in Bezug auf die Zielvorgabe (50) kleiner als der vorgegebene Vergleichswert ist, abgebrochen wird.

7. Verfahren nach einem der vorhergehenden Ansprüche, **dadurch gekennzeichnet, dass** anhand der Zielvorgabe (50) wenigstens ein Simulationsmodell (46) automatisiert ausgewählt wird.

8. Verfahren nach einem der vorhergehenden Ansprüche, **dadurch gekennzeichnet, dass** anhand der Zielvorgabe (50) zumindest der wenigstens eine Startparameter oder die wenigstens eine Einstellung automatisiert bestimmt werden.

9. Verfahren nach einem der vorhergehenden Ansprüche, **dadurch gekennzeichnet, dass** zumindest mehrere Startparameter oder mehrere Einstellungen vorgegeben werden, wobei wenigstens ein Startparameter beziehungsweise wenigstens eine Einstellung für das Durchführen der Simulation fest vorgegeben wird.

10. Verfahren nach einem der vorhergehenden Ansprüche, **dadurch gekennzeichnet, dass** während des Betreibens (48) des Simulationsmodells (46) zu wenigstens einem vorgegebenen Zeitpunkt oder bei Erreichen von wenigstens einer vorgegebenen Bedingung ein Einzeldatensatz erzeugt wird, der zeitspezifische Simulationsdaten in Bezug auf den wenigstens einen Zeitpunkt beziehungsweise bedingungsspezifische Simulationsdaten in Bezug auf die wenigstens eine vorgegebene Bedingung aufweist.

11. Verfahren nach Anspruch 10, **dadurch gekennzeichnet, dass** abhängig von den zeitspezifischen beziehungsweise bedingungsspezifischen Simulationsdaten der wenigstens eine Startparameter, die wenigstens eine Einstellung und/oder das wenigstens eine Simulationsmodell (46) automatisiert verändert werden und das Simulationsmodell (46) erneut betrieben (48) wird.

12. Verfahren nach Anspruch 11, **dadurch gekennzeichnet, dass**, insbesondere sämtliche, Simulationsdaten zum Trainieren eines neuronalen Netzes einer Rechnereinheit (30, 32, 34) genutzt werden, welche zum Betreiben (48) der Simulation dient, wobei das neuronale Netz wenigstens mit dem Fertigungsprozess (82) oder mit dem digitalen Zwilling (84) gekoppelt wird.

13. Rechnerprogrammprodukt umfassend ein Programm für eine Rechnereinheit, wobei das Programm Programmkodeabschnitte eines Rechnerprogramms zum Ausführen der Schritte eines Verfahrens nach einem der vorhergehenden Ansprüche aufweist, wenn das Rechnerprogramm durch die Rechnereinheit (30, 32, 34) ausgeführt wird, sodass wenigstens ein Ergebnisdatensatz (36, 38, 40, 42) für einen zukünftigen Betrieb eines Fertigungsprozesses (82) bereitgestellt (62) wird.

14. Elektronisch lesbarer Datenträger mit darauf gespeicherten elektronisch lesbaren Steuerinformationen, welche zumindest ein Rechnerprogrammprodukt nach Anspruch 13 umfassen und derart ausgestaltet sind, dass bei Steuerung einer Rechnereinheit (30, 32, 34) unter Nutzung der Steuerinformationen des Datenträgers die Rechnereinheit (30, 32, 34) ein Verfahren nach einem der Ansprüche 1 bis 12 durchführt.

15. Vorrichtung (80) zum Unterstützen eines industriellen Fertigungsprozesses (82), wobei die Vorrichtung (80) ausgebildet ist,
- einen digitalen Zwilling (84) bereitzustellen und den digitalen Zwilling (84) mit dem Fertigungsprozess (82) zu koppeln, wobei der digitale Zwilling (84) ein Verhalten des Fertigungsprozesses (82) nachbildet,
- den digitalen Zwilling (84) vom Fertigungsprozess (82) zu entkoppeln,
- abhängig vom digitalen Zwilling (84) wenigstens ein Simulationsmodell (46), wenigstens einen Startparameter für das jeweilige Simulationsmodell (46), wenigstens eine Einstellung für das jeweilige Simulationsmodell (46) sowie eine Zielvorgabe (50) für ein Ergebnis des Fertigungsprozesses vorzugeben,
- das wenigstens eine Simulationsmodell (46) mit dem wenigstens einen Startparameter und der wenigstens einen Einstellung numerisch mittels einer Rechnereinheit (30, 32, 34) als Simulation zu betreiben (48),
- Ergebnisdaten (36, 38, 40, 42) aus dem Betrieb (48) des Simulationsmodells (46) in Bezug auf die Zielvorgabe (50) zu ermitteln, und
- die Ergebnisdaten (36, 38, 40, 42) für einen zukünftigen Betrieb des Fertigungsprozesses (82) bereitzustellen (62).
